(19) **Europäisches Patentamt / European Patent Office / Office européen des brevets**

(11)  **EP 1 727 380 B1**

(12)  **EUROPEAN PATENT SPECIFICATION**

(45) Date of publication and mention
of the grant of the patent:
**16.05.2012  Bulletin 2012/20**

(51) Int Cl.:
*H04W 8/18* *(2009.01)*

(21) Application number: **06120339.4**

(22) Date of filing: **06.07.2001**

(54) **A terminal in a mobile communication system**

Endgerät in einem Mobilkommunikationssystem

Terminal dans un système de communication mobile

(84) Designated Contracting States:
**AT BE CH CY DE DK ES FI FR GB GR IE IT LI LU MC NL PT SE TR**

(30) Priority: **07.07.2000  SE 0002572**

(43) Date of publication of application:
**29.11.2006  Bulletin 2006/48**

(62) Document number(s) of the earlier application(s) in accordance with Art. 76 EPC:
**01950140.2 / 1 310 114**

(73) Proprietor: **Telefonaktiebolaget LM Ericsson (publ)**
**164 83 Stockholm (SE)**

(72) Inventors:
• **Skog, Robert**
  **165 76 Hässelby (SE)**
• **Pehrson, Staffan**
  **182 39 Danderyd (SE)**

(74) Representative: **Norin, Klas et al**
**Ericsson AB**
**Patent Unit Service Layer & Multimedia**
**164 80 Stockholm (SE)**

(56) References cited:
**WO-A1-01/35689      WO-A1-95/35002**
**WO-A2-99/56431**

EP 1 727 380 B1

**Description**

Field of the invention

The present invention relates to a terminal in a mobile communication system according to the preamble of the independent claim.

Background of the invention

In the mobile Internet world, users may have more than one type of radio access to reach their applications. The different radio accesses (access bearers) could be e.g. Short Message Service (SMS), Unstructured Supplemental Service Data (USSD), Circuit Switched Data (CSD) (9.6 Kbps), CSD (14.4 Kbps), General Packet Radio Services (GPRS) (up to 384 Kbps), Universal Mobile Telephone System (UMTS) (up to 2 Mbps) or Bluetooth (short range, high frequency communication protocol).
These bearers have different capabilities in terms of e.g. transmission speed.

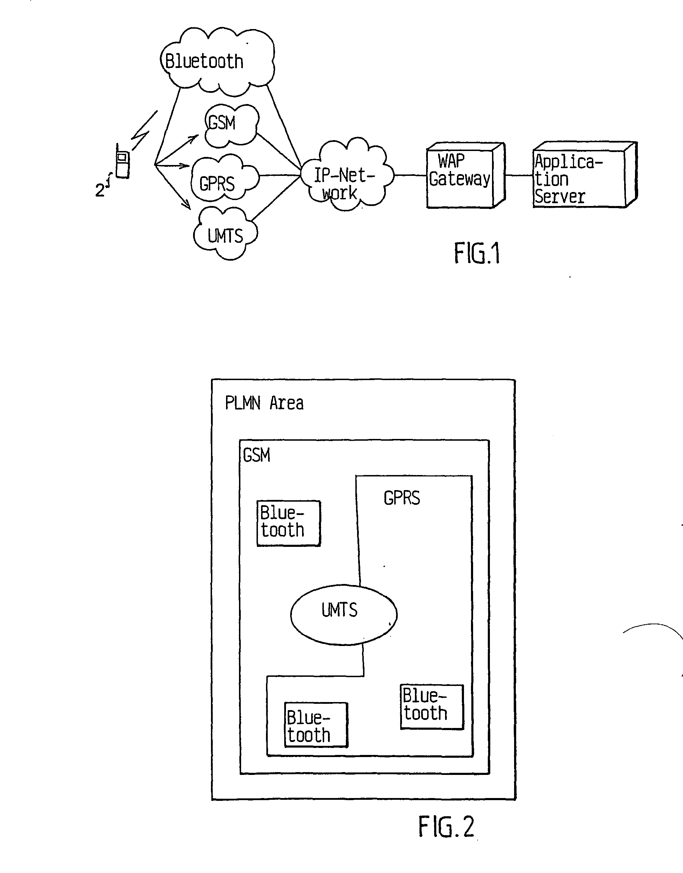

Figure 1 illustrates a system according to the state of the art.
A terminal 2, e.g. a mobile phone, can reach an Application Server via a Wireless Application Protocol (WAP) Gateway and via several types of access technology. The WAP technologies are e.g. described on http://www.wapforum.org/, (homepage for WAP forum) or http://www.wapforum.org/what/technical.htm, (WAP Specifications).
Wireless Application Protocol (WAP) is a technology that enables wireless access to Internet applications from a terminal, preferably a mobile phone.
The WAP forum has defined a WAP architecture for pulling (i.e. user initiated) information from Internet (e.g. Internet browsing) and pushing (i.e. application initiated) information (e.g. sending news messages, mail notification).
Wireless Application Environment (WAE) has adopted a model that closely follows the World Wide Web (WWW) model. All content is specified in formats that are similar to the standard Internet formats. Content is transported using standard protocols in the WWW domain and an optimized HTTP-like protocol in the wireless domain, a WAP communication protocol, preferably the Wireless Session Protocol (WSP). WAE has borrowed from WWW standards including authorizing and publishing methods wherever possible.
A mobile phone could establish a circuit switched data call in the GSM network or use a packet switched data network like the General Packet Radio Services (GPRS) or the Universal Mobile Telephone System (UMTS) which is the standard for the next generation mobile telephone system in Europe. There is also the possibility to use short-range radio access technology like Bluetooth. As mentioned above figure 1 illustrates a communication system according to the prior art where a mobile telephone 2 may establish connection to an application server via one of many access bearers (e.g. Bluetooth, GSM, GPRS or UMTS), a WAP Gateway and an IP network.
In figure 1 the Application Server is connected to the WAP Gateway via a LAN or via an Internet Protocol network (IP network) and the WAP Gateway may in turn be connected to the mobile phone 2 via a further a IP network. It should be noted that one of the IP networks in figure 1 might be omitted. The protocol used from the WAP Gateway to reach the applications, residing in the Application Server, is HTTP (the HTTP specification is a well-known established standard that is described on http://www.ietf.org/rfc/rfc2068.txt?number=2068).
The Application Server does not know what bearer the access was made with which might lead to unacceptable consequences regarding a user's possibility to access certain application information.
For example, if you surf (using SMS bearer) and select a WAP page, that was designed for CSD (9.6 Kbps), could result in that the downloading time for the page will be too long and therefore inconvenient for the end user.
One object of the present invention is to increase and optimize a user's accessibility of application information, inter alia in terms of shorter downloading time.
Another aspect of the present invention will now be discussed with references to figure 2. In an operator mobile network (PLMN) the different access types will coexists and will be unevenly deployed in one time of point. An operator that has GSM coverage and decides to introduce GPRS will start to do this in selected areas, like for example in cities. The same will be valid when introducing a next generation mobile system, e.g. UMTS. The reason for gradually introducing the bearers with the higher capacity is related to cost. It is a big investment for the operator to introduce new access bearers.
Figure 2 discloses coverage for different radio accesses in a mobile network. Mobile phones may be moved around in the PLMN area and, depending on the radio accesses availability, be able to use different bearers. Another aspect regarding the choice of bearer, except for different downloading times, is related to the different costs for using different bearers. It may be cheaper to use one before another bearer.
WO 9956431 describes a method for handling sessions between a wireless terminal and a server, wherein the terminal initiates a request of data to the server, said request comprising an identification of the requested data and terminal ID. The server uses the terminal ID to check up user profile information from an associated database. The user profile information indicates a data format which shall be handled be the terminal. This info can then be used by the server to forward the requested data to the terminal in the format defined by the user profile information.

WO 9535002 describes a method and an apparatus for negotiating service configurations in a digital communication system. The method comprises generating and transmitting a request message indicative of a service configuration at a first communication device, receiving the request at a second device, determining if the configuration request is acceptable in accordance with the capabilities of the second device, and generating and transmitting a response message in accordance with the determination, to the first device.

WO 0135689, which is a prior art document falling under Article 54(3) EPC, describes a method and a system for supplying data via a network system, the method comprising the steps of: Establishing a connection using an initial data bearer; requesting, by a terminal, a service for providing the data; selecting a preferred data bearer for supplying the data; judging the selected data bearer and rejecting or accepting the selected data bearer based on the judging step. The bearer may be selected based on terminal capabilities.

A drawback with communication systems used today is that the information about the bearer is not known to the application, e.g. when using WAP.

Thus, another object of the present invention is to provide a communication system that overcomes this drawback.

## Summary of the invention

The above-mentioned objects are achieved by a terminal in a communication system according to the characterizing portion of the independent claim.

Preferred embodiments are set forth in the dependent claims.

A mobile phone may use different bearers, e.g. GPRS, Circuit Switched Data (CSD) or SMS/USSD (via GSM), and the same bearer may use different transmission speeds depending on for example available channels at the moment. In order for the application to know the capability of the bearer that is used in the radio access the capability must be recognized and forwarded to the application server.

Thus, since information about the capability of the bearer is conveyed to the application, the present invention overcomes the above-mentioned drawbacks by making it possible for an application to tailor the accessed information content depending on the capability of the bearer that is used for the specific access.

In order to provide the user with a valuable service, the application has to adapt to the capability of the bearer that is used for the access. Adaptation can mean that the information formatting is adjusted to the bearer capabilities or even that the information itself is adjusted. An example of the latter case is an application that only sends a summary of world news to a mobile phone rather than extensive articles.

## Short description of the appended drawings

Figure 1 illustrates a system according to the state of the art.
Figure 2 shows coverage for different radio accesses in a mobile network
Figure 3 shows a communication system wherein the present invention may be implemented.
Figure 4 illustrates components in a terminal that is used when implementing the present invention.

## Detailed description of preferred embodiments of the invention

The capability of an access bearer includes a parameter regarding the transmission speed used by that bearer. Also other parameters related to the transmission, e.g. bandwidth, may be included in the capability information.

Throughout the application, "terminal" is used to describe a device adapted to initiate an information request to an application server and to receive the requested information. In the description of the preferred embodiment the terminal is exemplified by a mobile phone. However, any device provided with means for generating such an information request may be used as a terminal. Among those may be mentioned a laptop computer, a mobile phone, and all handheld devices adapted to be wirelessly connected to an application server.

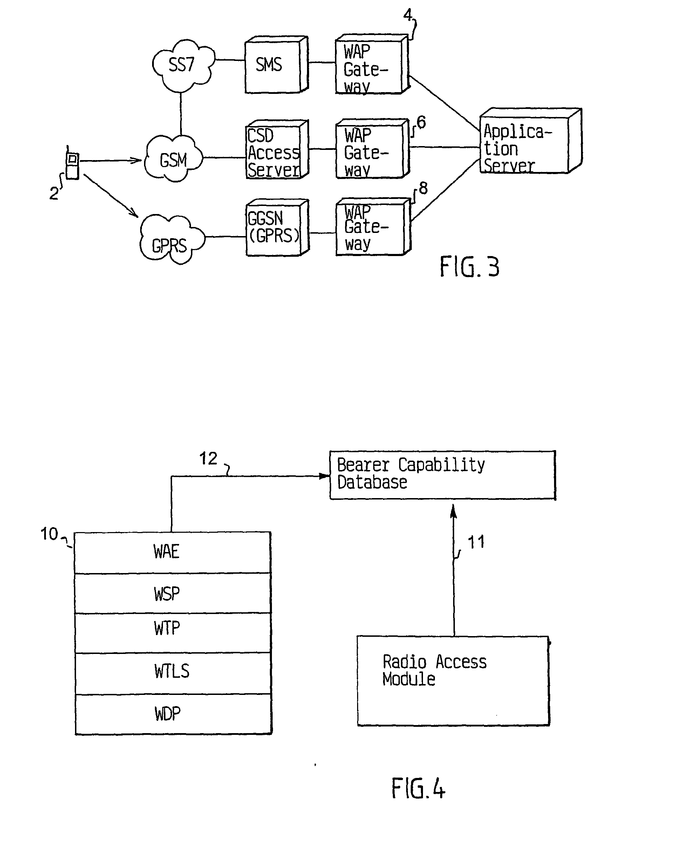

Turning now to figure 3, showing one WAP Gateway 4,6,8 arranged for each type radio access bearer. The system shown in figure 3 discloses three examples of access bearers, each being provided with a WAP Gateway especially designed with regard to the capability for its respective access bearer. In the figure is the Short Message Service (SMS) server connected to the terminal 2 via a Signaling System No. 7 (SS7) (a protocol for signaling) and GSM network in accordance with established technique. The CSD Access Server and the Gateway GPRS Support Node (GGSN) server are connected to the terminal 2 via a GSM network and a GPRS network, respectively, also in accordance with established technique.

The number of WAP Gateways is naturally not limited to three; instead the number of used WAP Gateways equals the number of different used access bearers.

By having one gateway per access bearer, the different gateways would know the capability of the access bearer it is serving but maybe not the actual used transmission speed, because it may be decided at the phone, if the used bearer are capable of using different speeds.

The terminal initiates a request (WAP request or HTTP request) which is sent to the application via the access bearer and the gateway allocated to the access bearer. When the request passes the gateway, the capability of the access bearer is appended to the request. This could be done, for example, by using a cookie in a header of the request. Before the capability is appended to the request, if the request was made from a WAP enabled terminal, i.e. was a WAP request, the request in Wireless Session Protocol (WSP) is transformed into an HTTP request. Then, the WAP Gateway appends to the HTTP request the capability of the access bearer in an HTTP header of the HTTP request.

Example of a HTTP header:

Cookie: Access-Bearer-Type="(*bearer*)".

Where bearer is the type of access. For example, *SMS, USSD (Unstructured Supplemental Service Data), CSD-9.6, CSD-14.4, GPRS, UMTS* or *Bluetooth.*

The HTTP request is then supplied to the Application Server.

The requested application server is able to extract the Access-Bearer-Type cookie from the HTTP header according to well-known HTTP programming technique. The requested application may then be tailored in response of the received capability of the access bearer in order to achieve an optimized transmission to the terminal requesting the application information.

An alternative to the above-described system the WAP gateway may be substituted with an HTTP proxy server. This would be possible if a terminal (e.g. mobile phone) would use HTTP directly.

The terminal of the invention is described in connection with figure 4. Figure 4 illustrates components in a terminal that is used when implementing the present invention according to the second preferred embodiment. The terminal comprises a Radio Access Module (RAM), a Bearer Capability Database (BCD) and a WAP User Agent 10. The Radio Access Module is able to detect the type of bearer that the terminal uses based upon, for example, frequencies and number of time slots in the radio link. This information is continuously interpreted in the RAM. By interpreting used frequency, number of time slots, type of radio channel used, the RAM will calculate used transmission speed, and continuously write it into the memory storage of the Bearer Capability Database (11 in figure 4). At each request, this information in the BCD is appended to the request message (12 in figure 4). If the terminal already is connected to the application server and a change in the capabilities occurs, the terminal is informed and the RAM interprets it and writes it continuously into the BCD. This new information is then appended into the next WAP request (or HTTP request).

The User Agent 10 (defined in the above referenced WAP specification and shown to the left in the figure) comprises a number of protocol layers. An alternative to a WAP user agent would be to directly use an HTTP client in the terminal. The different layers in the WAP User Agent from above are: Wireless Application Environment (WAE), Wireless Session Protocol (WSP), Wireless Transaction Protocol (WTP), Wireless Transport Layer Security (WTLS) and Wireless Datagram Protocol. (WDP). When an application request (information request) is initiated the User Agent (or HTTP client) is arranged to make a WAP request (or HTTP request) to an application via the WAP protocol (or HTTP protocol) and the relevant capability of the access bearer is identified in the Bearer Capability Database.

The thus identified capability is then appended to the WAP request (HTTP request) in a WAP header (or HTTP header). For an example of an HTTP header, see the example described above.

A WAP header will have the same look but can be binary encoded.

When the application server has received the capability of the used bearer, e.g. according to the system described in connection with figure 3, the application is adapted to tailor the application information to be transmitted to the accessing user.

This may be performed in many different ways, e.g. the information formatting is adjusted to the bearer capabilities or even that the information itself is adjusted. An example of the latter case is an application that only sends a summary of world news to a mobile phone rather than extensive articles. Another example of adjusting the information is to filter out images from a newspaper article and only send the text information.

The present invention is not limited to the above-described preferred embodiments. Various alternatives, modifications and equivalents may be used. Therefore, the above embodiments should not be taken as limiting the scope of the invention, which is defined by the appending claims.

**Claims**

1.  A terminal (2) in a wireless communication system, which terminal is adapted to be wirelessly connected to at least one access means (SMS, CSD, GPRS), each of the at least one access means being arranged to provide wireless access over a type of access bearer, and each access bearer having a bearer capability, the terminal being also adapted to initiate a request and send it to an application server via the access bearer, wherein the terminal comprises a radio access module, a bearer capability database and a user agent (10), the terminal **characterized in that**:

    - the radio access module is arranged to continuously interpret bearer capability information for the access bearer used by the terminal and write it (1) in a memory storage of the bearer capability database, and
    - the user agent (10) is arranged to identify a relevant bearer capability in the bearer capability database, and append the information corresponding to the identified bearer capability to a request.

2.  A terminal according to claim 1, wherein the radio access module is able to calculate used transmission speed, and continuously write it into the memory storage of the bearer capability database.

3.  A terminal according to claim 1 or 2, wherein the radio access module is further able to interpret a change in the bearer capabilities and write it continuously into the bearer capability database, when the terminal is already connected to an application server,

4.  A terminal according to any of the preceding claims, wherein said radio access module is able to detect the type of bearer that the terminal uses, based on information continuously interpreted by the radio access module.

5.  A terminal according to any of the preceding claim, wherein the request is a WAP request or a HTTP request.

**Patentansprüche**

1.  Endgerät (2) in einem drahtlosen Kommunikationssystem, welches Endgerät dazu angepasst ist, drahtlos an mindestens ein Zugangsmittel (SMS, CSD, GPRS) angeschlossen zu werden, wobei jedes des einen oder der mehreren Zugangsmittel dazu angeordnet ist, drahtlosen Zugang über einen Typ von Zugangsträger bereitzustellen, und jeder Zugangsträger eine Trägerfähigkeit hat, wobei das Endgerät auch dazu angepasst ist, eine Anforderung zu initiieren und sie über den Zugangsträger an einen Anwendungsserver zu senden, worin das Endgerät ein Funkzugangsmodul, eine Trägerfähigkeits-Datenbank und einen Benutzeragenten (10) umfasst, wobei das Endgerät **dadurch gekennzeichnet ist, dass**:

    - das Funkzugangsmodul dazu angeordnet ist, Trägerfähigkeitsinformation für den vom Endgerät verwendeten Zugangsträger kontinuierlich zu interpretieren und sie in einen Memory-Speicher der Trägerfähigkeits-Datenbank zu schreiben (1), und
    - der Benutzeragent (10) dazu angeordnet ist, eine relevante Trägerfähigkeit in der Trägerfähigkeits-Datenbank zu identifizieren, und die der identifizierten Trägerfähigkeit entsprechende Information an eine Anforderung anzuhängen.

2.  Endgerät nach Anspruch 1, worin das Funkzugangsmodul befähigt ist, die verwendete Sendegeschwindigkeit zu berechnen und sie kontinuierlich in den Memory-Speicher der Trägerfähigkeits-Datenbank zu schreiben.

3.  Endgerät nach Anspruch 1 oder 2, worin das Funkzugangsmodul außerdem befähigt ist, eine Änderung in den Trägerfähigkeiten zu interpretieren und sie kontinuierlich in die Trägerfähigkeits-Datenbank zu schreiben, wenn das Endgerät schon an einen Anwendungsserver angeschlossen ist.

4.  Endgerät nach einem der vorhergehenden Ansprüche, worin das Funkzugangsmodul befähigt ist, auf der Basis von durch das Funkzugangsmodul kontinuierlich interpretierter Information den vom Endgerät verwendeten Typ von Träger zu detektieren.

5.  Endgerät nach einem der vorhergehenden Ansprüche, worin die Anforderung eine WAP-Anforderung oder eine HTTP-Anforderung ist.

**Revendications**

1. Terminal (2) dans un système de communication sans fil, lequel terminal est apte à être connecté sans fil à au moins un moyen d'accès (SMS, CSD, GPRS), chacun dudit au moins un moyen d'accès étant agencé de manière à fournir un accès sans fil sur un type de porteuse d'accès, et chaque porteuse d'accès présentant une capacité de porteuse, le terminal étant apte à initier une demande et à l'envoyer à un serveur d'applications via la porteuse d'accès, dans lequel le terminal comprend un module d'accès radio, une base de données de capacités de porteuses et un agent utilisateur (10), le terminal étant **caractérisé en ce que** :

   - le module d'accès radio est agencé de manière à interpréter en continu des informations de capacités de porteuses pour la porteuse d'accès utilisée par le terminal, et à les écrire (1) dans un stockage en mémoire de la base de données de capacités de porteuses ; et
   - l'agent utilisateur (10) est agencé de manière à identifier une capacité de porteuse pertinente dans la base de données de capacités de porteuses, et à annexer les informations correspondant à la capacité de porteuse identifiée à une demande.

2. Terminal selon la revendication 1, dans lequel le module d'accès radio est apte à calculer la vitesse de transmission utilisée, et à l'écrire en continu dans le stockage en mémoire de la base de données de capacités de porteuses.

3. Terminal selon la revendication 1 ou 2, dans lequel le module d'accès radio est en outre apte à interpréter une modification dans les capacités de porteuses, et à l'écrire en continu dans la base de données de capacités de porteuses, lorsque le terminal est déjà connecté à un serveur d'applications.

4. Terminal selon l'une quelconque des revendications précédentes, dans lequel ledit module d'accès radio est apte à détecter le type de porteuse que le terminal utilise, sur la base d'informations interprétées en continu par le module d'accès radio.

5. Terminal selon l'une quelconque des revendications précédentes, dans lequel la demande est une demande de protocole WAP ou une demande de protocole HTTP.

FIG.1

FIG.2

FIG. 3

FIG.4

**EP 1 727 380 B1**

**Patent documents cited in the description**

- WO 9956431 A
- WO 9535002 A
- WO 0135689 A